# EUROPEAN PATENT APPLICATION

(11) **EP 4 610 091 A1**
(43) Date of publication of application: **03.09.2025**
(21) Application number: 25159229.1
(22) Date of filing: 20.02.2025
(51) Int. Cl.: B60L 15/20

(54) **ELECTRIC VEHICLE**

(30) Priority: 29.02.2024 JP 2024030189
(71) Applicant: TOYOTA JIDOSHA KABUSHIKI KAISHA, Toyota-shi, Aichi-ken, 471-8571 (JP)
(72) Inventor: MOTEKI, Taro, TOYOTA-SHI, AICHI-KEN, 471-8571 (JP); IMAMURA, Tatsuya, TOYOTA-SHI, AICHI-KEN, 471-8571 (JP); ISAMI, Yoichiro, TOYOTA-SHI, AICHI-KEN, 471-8571 (JP)
(74) Representative: Cabinet Beau de Loménie

(57) **Abstract**

An electric vehicle (100) having an electric motor (6) as a driving source, includes: a processor (110) configured to control driving torque to be output by the electric motor (6); a first indicator; and a second indicator, wherein the processor (110) is configured to: determine a basic torque that is driving torque in a state where the second indicator is not operated, according to the operation amount of the first indicator and a vehicle speed of the electric vehicle; change the driving torque between the basic torque and a minimum torque according to the operation amount of the second indicator; and reduce sensitivity of the change of the driving torque according to the operation amount of the second indicator when a predetermined condition is satisfied.

## Description

### BACKGROUND OF THE INVENTION

### 1. Field of the Invention

The present disclosure relates to an electric vehicle having an electric motor as a driving source.

### 2. Description of Related Art

Japanese Patent No. 6787507 (JP 6787507 B) and Japanese Unexamined Patent Application Publication No. 2022-042730 (JP 2022-042730 A) disclose related arts relating to electric vehicles in which a manual gear shift operation of a manual gear shift type internal combustion engine vehicle using an internal combustion engine as a driving source can be simulated by controlling an electric motor. The electric vehicles of these related arts are equipped with a pseudo clutch pedal that imitates a clutch pedal of a manual gear shift type internal combustion engine vehicle in addition to an accelerator pedal. A driver operates the pseudo clutch pedal with his/her left foot while operating the accelerator pedal with his/her right foot, whereby it is possible to perform delicate control of driving torque that has not been possible in normal electric vehicles each having only an accelerator pedal.

### SUMMARY OF THE INVENTION

When the driving torque is controlled by a driver's own operation, it is preferable if the delicacy of the control can be varied according to the situation. The present disclosure relates to control of driving torque with delicacy to match a situation by a driver's own operation in an electric vehicle having an electric motor as a driving source.

An electric vehicle having an electric motor as a driving source according to a first aspect of the present disclosure, includes a processor configured to control driving torque to be output by the electric motor; a first indicator, the first indicator being configured to issue a continuous instruction to the processor according to an operation amount of the first indicator; and a second indicator that is operable concurrently with the first indicator, the second indicator being configured to issue a continuous instruction to the processor according to an operation amount of the second indicator, wherein the processor is configured to: determine a basic torque that is driving torque in a state where the second indicator is not operated, according to the operation amount of the first indicator and a vehicle speed of the electric vehicle; change the driving torque between the basic torque and a minimum torque according to the operation amount of the second indicator; and reduce sensitivity of the change of the driving torque according to the operation amount of the second indicator when a predetermined condition is satisfied.

The electric vehicle according to the above aspect may further includes a third indicator configured to issue a discrete instruction to the processor for each operation, wherein the processor is configured to switch a relation of the operation amount of the first indicator, the vehicle speed, and the basic torque from among a plurality of predetermined relations according to an operation of the third indicator.

In the electric vehicle according to the above aspect, the predetermined condition may include that the vehicle speed is lower than a predetermined speed.

In the electric vehicle according to the above aspect, the predetermined condition may include that an operation speed of the second indicator is lower than a predetermined speed.

In the electric vehicle according to the above aspect, the predetermined condition may include that the third indicator is operated so as to increase the basic torque when the operation amount of the first indicator is identical and the vehicle speed is identical.

The electric vehicle according to the above aspect may further include a sound generator configured to artificially generate sound in a vehicle cabin, wherein the sound generator is configured to increase sound pressure or frequency of the sound according to the operation amount of the second indicator, and reduce sensitivity of a change of the sound pressure or frequency of the sound to the operation of the second indicator when the predetermined condition is satisfied.

According to the electric vehicle of the present disclosure, the driver can control the driving torque delicately by operating the first indicator and the second indicator concurrently. When a predetermined condition is satisfied, the sensitivity of the change of the driving torque to the operation of the second indicator is reduced, so that the driving torque can be controlled delicately according to a situation.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a configuration of a vehicle according to an embodiment of the present disclosure;
FIG. 2 is a diagram showing an example of a vehicle model according to the embodiment of the present disclosure;
FIG. 3 is a diagram showing an example of a change characteristic of a virtual transmission torque capacity with respect to a clutch pedal depression amount set in a clutch model according to the embodiment of the present disclosure;
FIG 4 is a diagram showing another example of the change characteristic of the virtual transmission torque capacity with respect to the clutch pedal depression amount set in the clutch model according to the embodiment of the present disclosure;
FIG. 5 is a diagram showing another example of the change characteristic of the virtual transmission torque capacity with respect to the clutch pedal depression amount set in the clutch model according to the embodiment of the present disclosure; and
FIG. 6 is a diagram showing an effect obtained by driving torque control using the clutch model according to the embodiment of the present disclosure.

### DETAILED DESCRIPTION OF EMBODIMENTS

### 1. Configuration of Power System of Vehicle

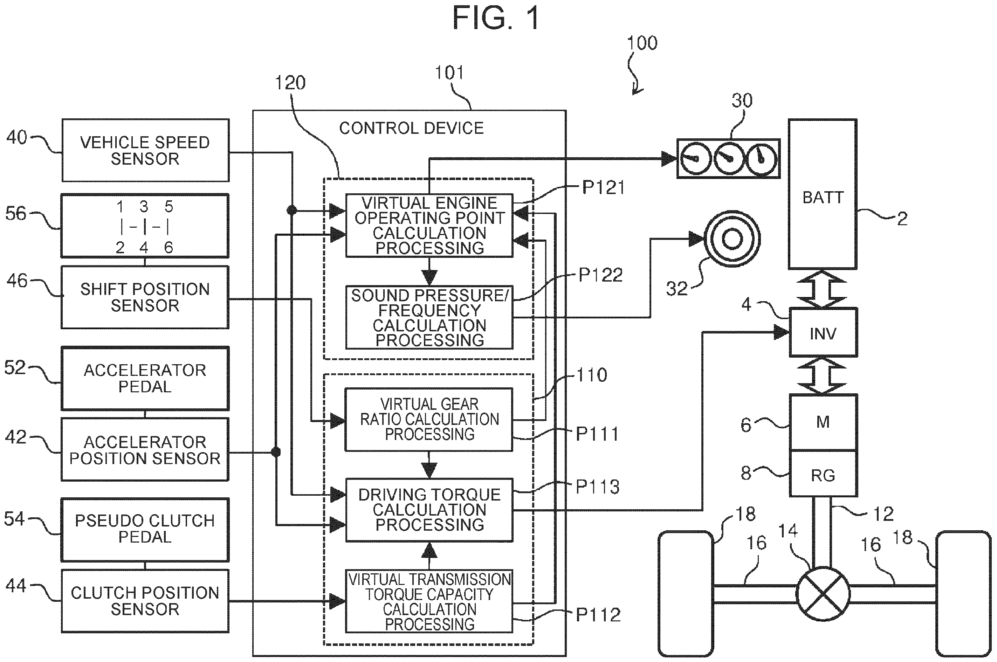

FIG. 1 is a diagram that schematically shows a configuration of a vehicle 100 according to an embodiment of the present disclosure. First, a configuration of a power system of a vehicle 100 will be described with reference to FIG. 1.

The vehicle 100 is equipped with an electric motor (M) 6 as a driving source for traveling. The vehicle 100 also includes a battery (BATT) 2 and an inverter (INV) 4. The battery 2 stores electric energy for driving the electric motor 6. In other words, the vehicle 100 is a battery electric vehicle (BEV) that runs with electric energy stored in the battery 2. The electric motor 6 is, for example, a three-phase AC motor. The inverter 4 is, for example, a voltage type inverter, and controls the torque of the electric motor 6 by PWM control.

An output shaft of the electric motor 6 is connected to a reduction gear (RG) 8. The reduction gear 8 is connected to a differential gear 14 by a propeller shaft 12. The differential gear 14 is connected to left and right drive wheels 18 by left and right drive shafts 16. The drive wheels 18 may be rear wheels or front wheels. However, the vehicle 100 may be configured as an all-wheel drive vehicle. In that case, a center differential gear may be provided on the propeller shaft 12, and driving torque divided by the center differential gear may be transmitted to the front wheels and the rear wheels, respectively.

### 2. Configuration of Control System of Vehicle

Next, a configuration of the control system of the vehicle 100 will be described with reference to FIG. 1.

The vehicle 100 is equipped with a vehicle speed sensor 40. The vehicle speed sensor 40 is a sensor that outputs a signal corresponding to the traveling speed of the vehicle 100 (hereinafter referred to as vehicle speed). At least one of wheel speed sensors (not shown) provided on the left and right front wheels and the left and right rear wheels respectively is used as the vehicle speed sensor 40.

The vehicle 100 also includes an accelerator position sensor 42. The accelerator position sensor 42 is a sensor that is provided to an accelerator pedal 52, and outputs a signal corresponding to an operation amount of the accelerator pedal 52. The operation amount of the accelerator pedal 52 means the depression amount of the accelerator pedal 52 by a driver, that is, an accelerator operation amount.

The accelerator pedal 52 is a driving operation member to be used to drive the vehicle 100. In addition to the accelerator pedal 52, a brake pedal (not shown) is included as a driving operation member. In addition to these driving operation members, the vehicle 100 is equipped with pseudo gear shift operation members that imitate operation members to be used for gear shift in a manual gear shift type internal combustion engine vehicle. The pseudo gear shift operation members include a pseudo clutch pedal 54 and a pseudo H-type shifter 56 described below.

The pseudo clutch pedal 54 is a dummy that is different from an actual clutch pedal. The pseudo clutch pedal 54 has a structure imitating that of a clutch pedal equipped in a conventional manual gear shift type internal combustion engine vehicle. For example, the pseudo clutch pedal 54 is equipped with a reaction mechanism that generates a reaction force against the driver's depression. A position when no depression force is applied is a starting end position of the pseudo clutch pedal 54, and a position when the pseudo clutch pedal is depressed to the farthest is a terminal position of the pseudo clutch pedal 54. The driver can operate the pseudo clutch pedal 54 from the starting end position to the terminal position against the reaction force from the reaction mechanism.

The vehicle 100 includes a clutch position sensor 44. The clutch position sensor 44 is a sensor that is provided to the pseudo clutch pedal 54, and outputs a signal corresponding to the operation amount of the pseudo clutch pedal 54. The operation amount of the pseudo clutch pedal 54 means the depression amount of the pseudo clutch pedal 54 by the driver.

The pseudo H-type shifter 56 is a dummy different from an actual shifter. The pseudo H-type shifter 56 has a structure imitating that of an H-type shifter equipped in a conventional manual gear shift type internal combustion engine vehicle. The pseudo H-type shifter 56 has a shift lever, the shift lever is made movable along an H-shaped gate. A shift position is assigned to each gate. However, since the vehicle 100 does not have any actual transmission, the shift positions of the pseudo H-type shifter 56 are virtual shift positions. In an example shown in FIG. 1, a first gear, a second gear, a third gear, a fourth gear, a fifth gear, and a sixth gear are provided as the virtual shift positions. In a conventional manual gear shift type internal combustion engine vehicle, the first gear is the shift position having the largest gear ratio, and the gear ratio is smaller in the order of the second gear, the third gear, the fourth gear, the fifth gear, and the sixth gear.

The vehicle 100 is equipped with a shift position sensor 46. The shift position sensor 46 is a sensor that is provided to the pseudo-H-type shifter 56, and outputs a signal indicating the shift position selected by the pseudo-H-type shifter 56. When the shift lever is not in any shift position, the shift position sensor 46 outputs a signal indicating a neutral position.

The vehicle 100 includes a control device 101. The sensors and devices to be controlled that are installed in the vehicle 100 are connected to the control device 101 via an in-vehicle network. The vehicle speed sensor 40, the accelerator position sensor 42, the clutch position sensor 44, and the shift position sensor 46 are examples of sensors installed in the vehicle 100.

The control device 101 is typically an electronic control unit (ECU). The control device 101 may be a combination of a plurality of ECUs. The control device 101 includes an interface, a memory, and a processor (not shown). The interface is connected to an in-vehicle network. The memory includes a RAM for temporarily recording data and a ROM for storing programs executable by the processor and various data related to the programs. The programs are composed of a plurality of instructions. The processor reads and executes the programs and data from the memory, and generates control signals based on signals obtained from the respective sensors. The number of the processors equipped in the control device 101 may be one or more. The one or more processors constitute a processing circuit.

The control device 101 includes a driving torque control device 110 and a display and sound control device 120. In detail, a program stored in the memory is executed by the processor, whereby the processor functions as at least the driving torque control device 110 and the display and sound control device 120. The processor functioning as the driving torque control device 110 and the processor functioning as the display and sound control device 120 may be separate processors or may be the same processor.

### 3. Driving Torque Control

A control target of the driving torque control device 110 is the inverter 4. A virtual shift position of the pseudo shifter 50 that is obtained from a signal of the shift position sensor 46 is input to the driving torque control device 110. The driving torque control device 110 executes processing P111 based on the virtual shift position. In the processing P111, a virtual gear ratio of the vehicle 100 is calculated using a vehicle model described below that is obtained by modeling a manual gear shift type internal combustion engine vehicle. The virtual gear ratio is a gear ratio of a transmission that is virtually implemented by torque control of the electric motor 6 using the vehicle model.

The depression amount of the pseudo clutch pedal 54 (hereinafter referred to as clutch pedal depression amount) obtained from the signal of the clutch position sensor 44 is also input to the driving torque control device 110. The driving torque control device 110 executes processing P112 based on the clutch pedal depression amount. In the processing P112, a virtual transmission torque capacity is calculated using the vehicle model.

The driving torque control device 110 further receives a vehicle speed obtained from a signal of the vehicle speed sensor 40, and an accelerator operation amount obtained from a signal of the accelerator position sensor 42. The driving torque control device 110 executes processing P113 based on the vehicle speed, the accelerator operation amount, the virtual gear ratio calculated in the processing P111, and the virtual transmission torque capacity calculated in the processing P112. In the processing P113, driving torque to be generated in the electric motor 6 is calculated from the vehicle speed, the accelerator operation amount, the virtual gear ratio, and the virtual transmission torque capacity by using the vehicle model. The driving torque control device 110 controls the inverter 4 so as to cause the electric motor 6 to generate the driving torque obtained from the vehicle model.

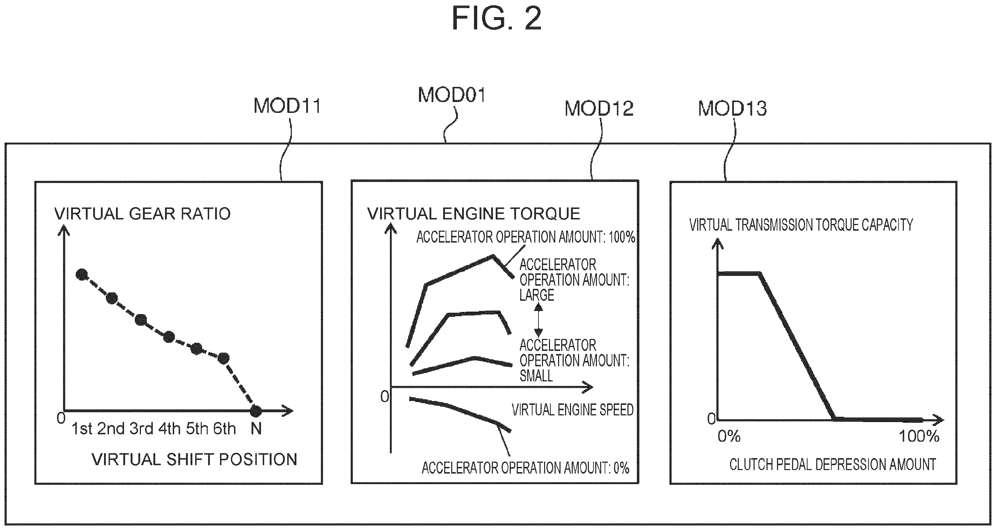

Here, the vehicle model to be used by the driving torque control device 110 will be described with reference to FIG. 2. As shown in FIG. 2, the vehicle model MOD01 includes a transmission model MOD11, an engine model MOD12, and a clutch model MOD13. A transmission to be virtually implemented by the vehicle model MOD01 is referred to as a virtual transmission. The virtual transmission is modeled in the transmission model MOD11. An engine which is virtually implemented by the vehicle model MOD01 is referred to as a virtual engine. The virtual engine is modeled in the engine model MOD12. Furthermore, the clutch which is virtually implemented by the vehicle model MOD01 is referred to as a virtual clutch. The virtual clutch is modeled in the clutch model MOD13.

The transmission model MOD11 calculates a virtual gear ratio. The virtual gear ratio is a gear ratio to be determined by the virtual shift position in the virtual transmission. The virtual gear ratio is set for each virtual shift position. A maximum virtual gear ratio is set for the first gear, and the virtual gear ratio is smaller in the order of the second gear, the third gear, the fourth gear, the fifth gear, and the sixth gear. The transmission model MOD11 calculates a virtual transmission torque by using the virtual gear ratio and a virtual engine torque described later. The virtual transmission torque is a virtual torque output from the virtual transmission. The driving torque control device 110 controls the inverter 4 to change the driving torque output by the electric motor 6 according to the virtual transmission torque. The virtual transmission torque changes discontinuously according to the switching of the virtual gear ratio. This discontinuous change in the virtual transmission torque induces a torque shock in the vehicle 100, thereby bringing such a sensation as if the vehicle is equipped with a stepped transmission.

The engine model MOD12 calculates a virtual engine speed and a virtual engine torque. The virtual engine speed is calculated from the vehicle speed and the virtual gear ratio according to a predetermined formula. When the virtual clutch is in a half-engaged state, the virtual engine speed is calculated from the vehicle speed, the virtual gear ratio, and a virtual slip ratio. The virtual engine torque is calculated from the virtual engine speed and the accelerator operation amount. In the engine model MOD12, the relation between the virtual engine speed and the virtual engine torque is specified for each accelerator operation amount. The torque characteristic of the engine model MOD12 can also be set to a characteristic adaptable to a gasoline engine or a characteristic adaptable to a diesel engine. Furthermore, the torque characteristic can also be set to a characteristic adaptable to a natural intake engine or a characteristic adaptable to a supercharged engine. When the virtual engine speed drops to a predetermined engine stall speed or less, the virtual engine torque is set to zero after a very short period of fluctuation, and the virtual engine speed is also lowered to zero.

The clutch model MOD13 calculates a virtual transmission torque capacity. The virtual transmission torque capacity means the transmission torque capacity of the virtual clutch. In the clutch model MOD13, a virtual transmission torque capacity is given for the clutch pedal depression amount. The clutch pedal depression amount is equal to 0% at the starting end position of the pseudo clutch pedal 54, and it is equal to 100% at the terminal position of the pseudo clutch pedal 54. When the clutch pedal depression amount is equal to 100%, the virtual transmission torque capacity is equal to zero. At this time, in the clutch model MOD13, the virtual clutch is completely released, and the transmission of the virtual engine torque from the virtual engine to the virtual transmission is cut off. When the clutch pedal depression amount is returned from the state of 100%, the state of the virtual clutch changes from the released state to the half-engaged state. As a result, the virtual transmission torque capacity starts to increase, and accordingly, the transmission of the virtual engine torque from the virtual engine to the virtual transmission starts. When the virtual transmission torque capacity increases to the virtual engine torque or more, the virtual clutch falls into an engaged state, and all of the virtual engine torque output from the virtual engine is input to the virtual transmission. Note that the virtual slip ratio may be calculated based on the virtual transmission torque capacity or may be given for the clutch pedal depression amount in a map.

### 4. Details of Clutch Model

In an actual clutch equipped in a manual gear shift type internal combustion engine vehicle, the transmission torque capacity is mechanically determined by the spring force, disc diameter, number of discs, friction coefficient, etc. The clutch stroke is also mechanically determined by an inter-disc distance. Therefore, in the actual clutch, the change characteristic of the transmission torque capacity for change in the clutch stroke is also mechanically determined, and this change characteristic is basically constant except for change over time caused by use.

On the other hand, according to the virtual clutch implemented by the clutch model MOD13, the change characteristic of the virtual transmission torque capacity can be made variable by programming the clutch model MOD13. One advantage of using the clutch model MOD13 to calculate the driving torque resides in that the driver can delicately control the driving torque to be output from the electric motor 6 by operating the pseudo clutch pedal 54 with his/her left foot while operating the accelerator pedal 52 with his/her right foot. If the change characteristic of the virtual transmission torque capacity for the clutch pedal depression amount can be made variable according to the situation, it would be possible to control the driving torque with delicacy which matches the situation.

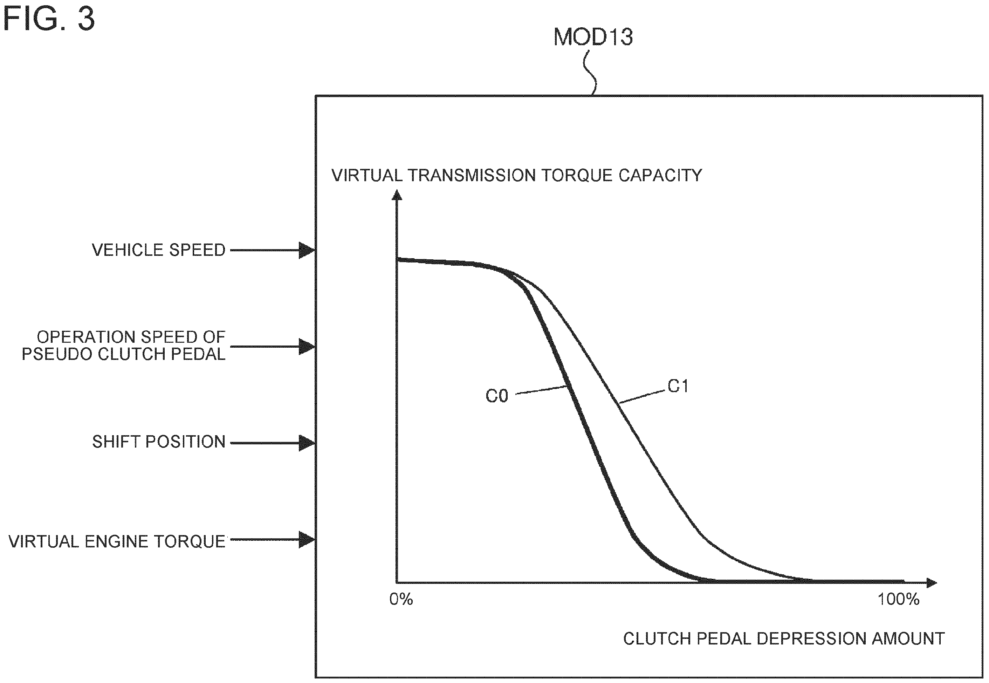

FIG. 3 is a diagram showing an example of the change characteristic of the virtual transmission torque capacity for the clutch pedal depression amount (hereinafter referred to as a virtual transmission torque capacity characteristic) set in the clutch model MOD13. In this example, a basic characteristic C0 and a low sensitivity characteristic C1 are set as the virtual transmission torque capacity characteristic in the clutch model MOD13.

The section of the clutch pedal depression amount in which the virtual clutch falls into a half-engaged state is different in size between the basic characteristic C0 and the low sensitivity characteristic C1. In the low sensitivity characteristic C1, when the clutch pedal depression amount is returned from the state of 100%, the virtual clutch changes from a released state to a half-engaged state at a clutch pedal depression amount larger than that of the basic characteristic C0. In other words, the start point of the half-engaged state in the low sensitivity characteristic C1 is closer to the terminal position of the pseudo clutch pedal 54 than the start point of the half-engaged state in the basic characteristic C0. Therefore, the section of the clutch pedal depression amount in which the virtual clutch falls into the half-engaged state is larger in the low sensitivity characteristic C1 than that in the basic characteristic C0. When the virtual clutch is in the half-engaged state, the change amount in the virtual transmission torque capacity for the change amount in the clutch pedal depression amount is lower in the low sensitivity characteristic C1 than that in the basic characteristic C0.

A torque obtained by multiplying a torque output from the clutch model MOD13 by the virtual gear ratio calculated in the transmission model MOD11 and a predetermined virtual reduction ratio is driving torque to be output from the electric motor 6. When the accelerator operation amount is constant, in other words, when the virtual engine torque is constant, the torque output from the clutch model MOD13 is determined by the virtual transmission torque capacity characteristic of the clutch model MOD13 and the clutch pedal depression amount. Therefore, when the low sensitivity characteristic C1 is selected in the clutch model MOD13, the ratio of the change amount in driving torque to the change amount in clutch pedal depression amount is smaller than that in the case where the basic characteristic C0 is selected. In other words, when the low sensitivity characteristic C1 is selected, the sensitivity of the change in driving torque to the operation of the pseudo clutch pedal 54 is smaller than that in the case where the basic characteristic C0 is selected.

When the sensitivity of the change in driving torque to the operation of the pseudo clutch pedal 54 becomes smaller, it is possible to perform more delicate control on the driving torque by operating the pseudo clutch pedal 54. However, on the other hand, the time for which the virtual clutch is in the half-engaged state is longer, which causes a delay in acceleration for the operation of the accelerator pedal 52. Therefore, in the clutch model MOD13, the basic characteristic C0 is usually selected, and the low sensitivity characteristic C1 is selected only when a predetermined condition is satisfied.

In order to determine whether a condition for selecting the low sensitivity characteristic C1 is satisfied, the clutch model MOD13 receives information such as the vehicle speed, the operation speed of the pseudo clutch pedal 54, the shift position of the pseudo H-type shifter 56, and the virtual engine torque calculated in the engine model MOD12. The condition for selecting the low sensitivity characteristic C1 includes at least the following three conditions. When none of the three conditions is satisfied, the basic characteristic C0 is selected, and when any one of the conditions is satisfied, the low sensitivity characteristic C1 is selected.

A first condition for selecting the low sensitivity characteristic C1 resides in that the vehicle speed is lower than a predetermined speed. The predetermined speed is set, for example, in a range from 0 km/h to about 20 km/h. When the clutch is caused to be quickly engaged at the starting time or during traveling at low speed in a manual gear shift type internal combustion engine vehicle, the engine speed drops suddenly and an engine stall occurs. According to the engine model MOD12, the engine stall is also reproduced in the virtual engine, so that the driving force of the electric motor 6 is suddenly lost and the vehicle 100 stops due to a driver's operation on the pseudo clutch pedal 54. Therefore, when the vehicle speed is lower than the predetermined speed, by selecting the low sensitivity characteristic C1, it is possible to make it difficult for a phenomenon such as an engine stall to occur even for a driver who is not good at operating the pseudo clutch pedal 54.

A second condition for selecting the low sensitivity characteristic C1 resides in that the operation speed of the pseudo clutch pedal 54 is lower than a predetermined speed. The operation speed of the pseudo clutch pedal 54 being low can be regarded as the driver being carefully operating the pseudo clutch pedal 54 such that the half-engaged state of the virtual clutch is maintained. By selecting the low sensitivity characteristic C1 in such a case, the control of the virtual transmission torque capacity of the virtual clutch by operating the pseudo clutch pedal 54 can be facilitated, so that it is possible to perform delicate control of the driving torque output from the electric motor 6.

A third condition for selecting the low sensitivity characteristic C1 resides in that a shift position with a predetermined high gear ratio is selected in the pseudo H-type shifter 56. The shift position with the predetermined high gear ratio is, for example, the first gear and the second gear. In the manual gear shift type internal combustion engine vehicle, as the gear ratio selected in the transmission is larger, the acceleration of the vehicle is more likely to change due to a change in the transmission torque capacity of the clutch. This is also a common issue to the vehicle 100 in which a manual gear shift type internal combustion engine vehicle is reproduced by the vehicle model MOD01. The sensitivity of the change in transmission torque capacity to the operation of the clutch pedal is fixed in the manual gear shift type internal combustion engine vehicle, however, the sensitivity can be changed between the basic characteristic C0 and the low sensitivity characteristic C1 in the vehicle 100. By selecting the low sensitivity characteristic C1 when a shift position with a high gear ratio is selected, it is possible to restrain the acceleration of the vehicle to change due to the operation of the pseudo clutch pedal 54.

In the clutch model MOD13, a plurality of low sensitivity characteristics having different sensitivities may be set in addition to the low sensitivity characteristic C1. In this case, as the virtual gear ratio of the selected shift position is higher, a low sensitivity characteristic having a lower sensitivity may be selected.

When all the three conditions described above are not satisfied, the virtual transmission torque capacity characteristic of the clutch model MOD13 is switched from the low sensitivity characteristic C1 to the basic characteristic C0. However, even in a case where any of the above-mentioned three conditions is satisfied, the virtual transmission torque capacity characteristic is switched from the low sensitivity characteristic C1 to the basic characteristic C0 when the following condition is satisfied. This condition resides in that the driver depresses the accelerator pedal 52 when the virtual clutch is in the half-engaged state, so that the virtual engine torque increases. When the virtual transmission torque capacity is insufficient for the increased virtual engine torque, the virtual engine speed increases due to slip of the virtual clutch, whereas no torque is transmitted to the virtual transmission, resulting in a shortage of driving torque to be output by the electric motor 6. Therefore, if the above condition is satisfied when the low sensitivity characteristic C1 is selected, the virtual transmission torque capacity characteristic is switched from the low sensitivity characteristic C1 to the basic characteristic C0, whereby it is possible to restrain a shortage of driving torque for the driver's operation of the accelerator pedal 52.

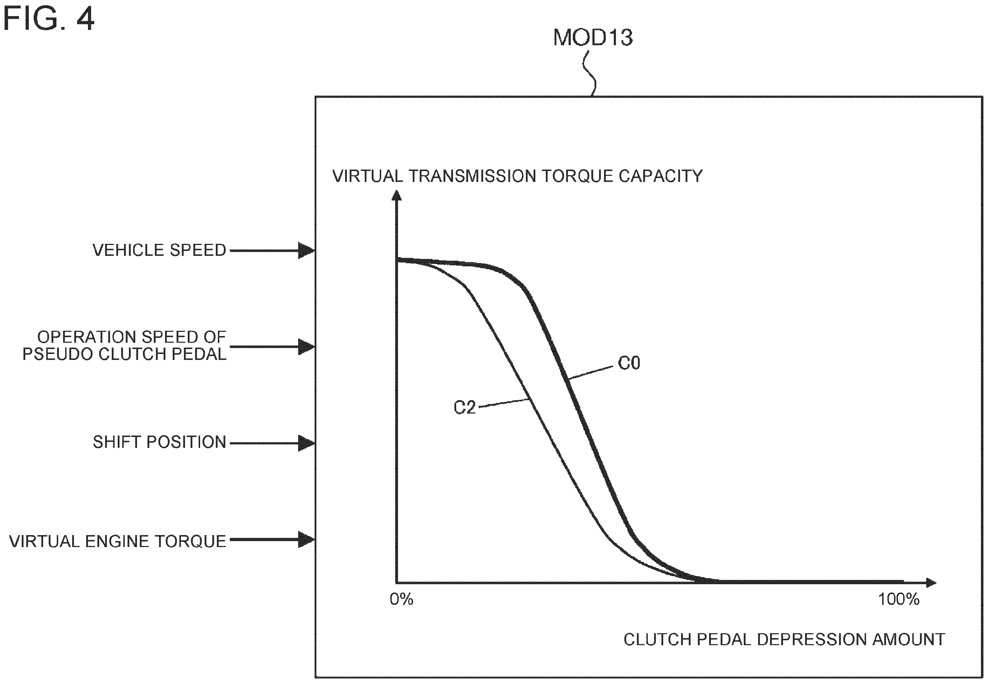

The foregoing description is made on one example of the virtual transmission torque capacity characteristic set in the clutch model MOD13. As described above, the virtual transmission torque capacity characteristic is variable, and it is required only that the virtual transmission torque capacity characteristic includes a characteristic that can reduce the sensitivity of the change in the driving torque to the operation of the pseudo clutch pedal 54 in addition to the basic characteristic. FIG. 4 is a diagram showing another example of the virtual transmission torque capacity characteristic set in the clutch model MOD13. In this example, the basic characteristic C0 and the low sensitivity characteristic C2 are set as the virtual transmission torque capacity characteristic in the clutch model MOD13.

The section of the clutch pedal depression amount in which the virtual clutch falls into a half-engaged state is different in size between the basic characteristic C0 and the low sensitivity characteristic C2. In the low sensitivity characteristic C2, when the clutch pedal depression amount is returned from the state of 100%, the virtual clutch changes from a half-engaged state to an engaged state at a clutch pedal depression amount smaller than that of the basic characteristic C0. In other words, the end point of the half-engaged state in the low sensitivity characteristic C2 is closer to the starting end position of the pseudo clutch pedal 54 than the end point of the half-engaged state in the basic characteristic C0. Therefore, the section of the clutch pedal depression amount in which the virtual clutch falls into the half-engaged state is larger in the low sensitivity characteristic C2 than that in the basic characteristic C0. When the virtual clutch is in the half-engaged state, the change amount in the virtual transmission torque capacity for the change amount in the clutch pedal depression amount is lower in the low sensitivity characteristic C2 than that in the basic characteristic C0.

The low sensitivity characteristic C2 described above can be combined with the low sensitivity characteristic C1 shown in FIG. 3. In that case, the start point of the half-engaged state is closer to the terminal position of the pseudo clutch pedal 54 than the start point of the half-engaged state in the basic characteristic C0, and the end point of the half-engaged state is closer to the starting end position of the pseudo clutch pedal 54 than the end point of the half-engaged state in the basic characteristic C0.

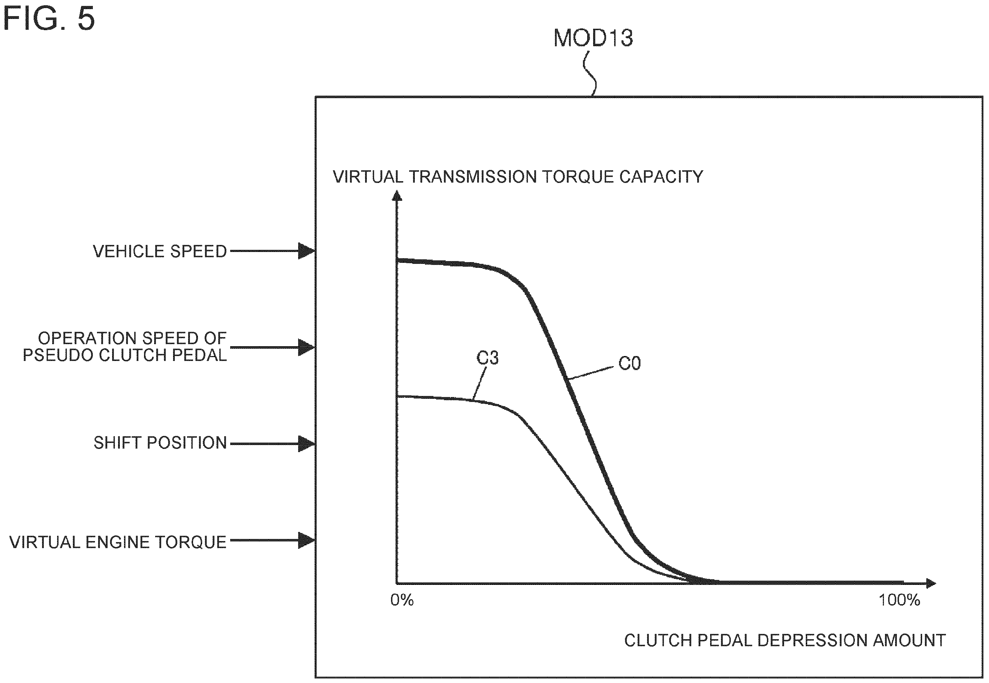

FIG. 5 is a diagram showing yet another example of the virtual transmission torque capacity characteristic set in the clutch model MOD13. In this example, the basic characteristic C0 and the low sensitivity characteristic C3 are set as the virtual transmission torque capacity characteristic in the clutch model MOD13.

The maximum virtual transmission clutch capacity of the virtual clutch is different between the basic characteristic C0 and the low sensitivity characteristic C3. The maximum virtual transmission clutch capacity of the low sensitivity characteristic C3 is set to be lower than the maximum virtual transmission clutch capacity of the basic characteristic C0. Therefore, when the state of the virtual clutch is set to the half-engaged state, the change amount in virtual transmission torque capacity for the change amount in clutch pedal depression amount is lower in the low sensitivity characteristic C3 than that in the basic characteristic C0.

The low sensitivity characteristic C3 described above may be combined with the low sensitivity characteristic C1 shown in FIG. 3 such that the maximum virtual transmission clutch capacity in the low sensitivity characteristic C1 is set to be lower than that in the basic characteristic C0. Furthermore, the low sensitivity characteristic C3 may be combined with the low sensitivity characteristic C2 shown in FIG. 4 such that the maximum virtual transmission clutch capacity in the low sensitivity characteristic C2 is set to be lower than that in the basic characteristic C0.

### 5. Effect

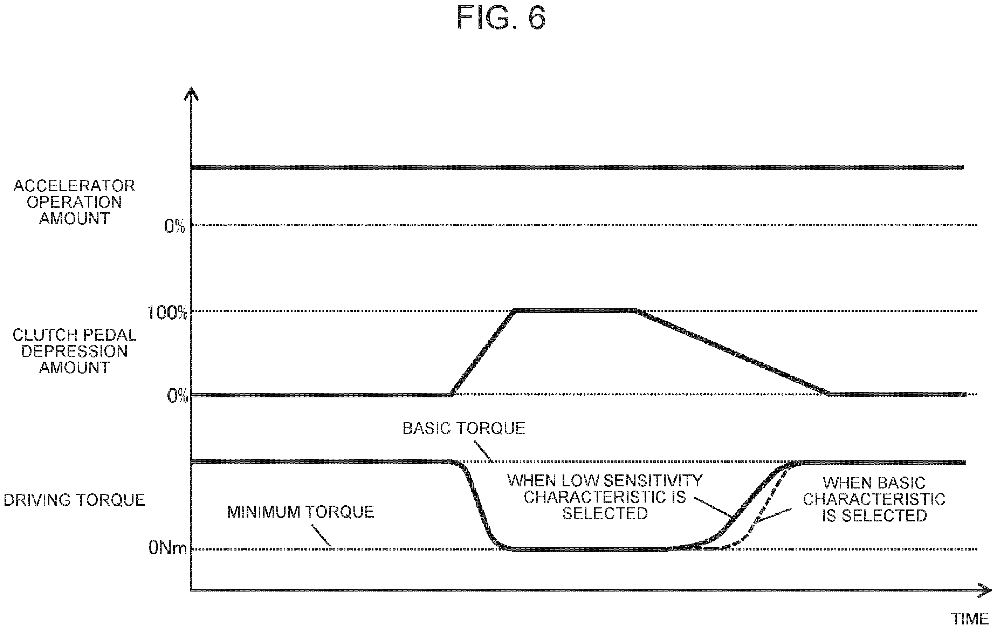

FIG. 6 is a diagram showing an effect obtained by the driving torque control using the clutch model MOD13. FIG. 6 shows the change in driving torque when the pseudo clutch pedal 54 is operated in a state where the accelerator operation amount is constant.

Here, the driving torque when the pseudo clutch pedal 54 is not operated, that is, when the clutch pedal depression amount is equal to 0% is called a basic torque. The basic torque changes according to the accelerator operation amount, the vehicle speed, and the shift position of the pseudo H-type shifter 56. When the pseudo clutch pedal 54 is operated and the clutch pedal depression amount increases, the driving torque decreases from the basic torque. When the pseudo clutch pedal 54 is depressed to approximately 100%, the driving torque decreases to the minimum torque. In the example shown in FIG. 6, the minimum torque is set to 0 Nm. Then, during a process of returning the depressed pseudo clutch pedal 54 to an original undepressed state again, the driving torque starts to increase from the minimum torque and eventually reaches the basic torque.

The driving torque changes from the minimum torque to the basic torque according to the change in the clutch pedal depression amount. When the basic characteristic is selected as the virtual transmission torque capacity characteristic of the clutch model MOD13, the driving torque changes as indicated by a dashed line in FIG. 6. On the other hand, when the above-mentioned predetermined condition is satisfied, the low sensitivity characteristic is selected as the virtual transmission torque capacity characteristic, so that the driving torque changes as indicated by a solid line in FIG. 6.

As is apparent from a comparison between the change in driving torque indicated by the dashed line and the change in driving torque indicated by the solid line, when the above-mentioned predetermined condition is satisfied, the sensitivity of the change in driving torque to the operation of the pseudo clutch pedal 54 is set to be smaller than usual. As a result, the driver who drives the vehicle 100 can control the driving torque with delicacy which matches the situation.

### 6. Display and Sound Control

Returning to FIG. 1 again, display and sound control by a display and sound control device 120 will be described. The display and sound control is control that gives a driver such a visual and auditory sensation that the driver drives a manual gear shift type internal combustion engine vehicle. The display and sound control includes display control for giving the driver such a visual sensation that the driver drives a manual gear shift type internal combustion engine vehicle, and sound control for giving the driver such an auditory sensation that the driver drives a manual gear shift type internal combustion engine vehicle.

The display and sound control device 120 receives a vehicle speed obtained from a signal of the vehicle speed sensor 40 and the accelerator operation amount obtained from a signal of the accelerator position sensor 42. Furthermore, the display and sound control device 120 receives a virtual gear ratio calculated in the processing P111 and a virtual transmission torque capacity calculated in the processing P112 from the driving torque control device 110. The display and sound control device 120 executes the processing P121 based on input information. In the processing P121, an operating point of the virtual engine which is represented by the virtual engine speed and virtual engine torque is calculated. The vehicle model MOD01 is used to calculate the operating point of the virtual engine.

A control target of the display control is an instrument panel 30 provided on an instrument panel of the vehicle 100. The instrument panel 30 includes a pseudo engine speed meter, a pseudo engine torque meter, and a pseudo engine power meter. These meters may be analog meters or digital meters. Furthermore, the instrument panel 30 does not have to be a dedicated device. For example, the instrument panel 30 may be displayed on a display by switching a display mode.

The virtual engine speed calculated in the processing P121 is displayed on the pseudo engine speed meter. The virtual engine torque is displayed on the pseudo engine torque meter. Furthermore, the virtual engine speed and the virtual engine power calculated from the virtual engine torque are displayed on the pseudo engine power meter. The displays of these meters change in response to a driver's operation on the accelerator pedal 52, and also change in response to the operation of the pseudo clutch pedal 54 and the operation of the pseudo H-type shifter 56. By watching the thus-changing displays on the meters, the driver can visually get such a feeling that he or she is driving a manual gear shift type internal combustion engine vehicle.

The control target of the sound control is a sound generator 32. A sound artificially generated by the sound generator 32 is output from a speaker installed in a vehicle cabin of the vehicle 100. The sound generator 32 can generate various sounds. One of the artificial sounds is a pseudo engine sound that imitates an engine sound of a conventional engine vehicle. The sound generator 32 changes the sound pressure and frequency of the pseudo engine sound to be generated from the speaker.

The display and sound control device 120 executes processing P122 based on the operating point of the virtual engine calculated in the processing P121. In the processing P122, the sound pressure of the pseudo engine sound is calculated using a sound pressure map, and the frequency of the pseudo engine sound is calculated using a frequency map. In the sound pressure map, sound pressure data is set for the virtual engine speed such that the sound pressure increases as the virtual engine speed increases. Furthermore, sound pressure data is set for the virtual engine torque such that the sound pressure increases as the virtual engine torque increases. In the frequency map, frequency data is set for the virtual engine speed such that the frequency increases as the virtual engine speed increases. Therefore, the sound pressure and frequency of the pseudo engine sound emitted from the speaker change according to the driver's operation on the accelerator pedal 52, and also change according to the operation of the pseudo clutch pedal 54 and the operation of the pseudo H-type shifter 56. By listening to the pseudo engine sound whose sound pressure and frequency change in this way, the driver is auditorily brought with such a sensation as if he/she drives a manual gear shift type internal combustion engine vehicle.

### 7. Modification

In the above embodiment, the accelerator pedal 52 and the accelerator position sensor 42 constitute a first indicator that issues a continuous instruction to the control device 101 in accordance with the amount of operation of the accelerator pedal 52. The accelerator pedal 52 is a pedal-type operating tool to be operated by a foot, but a lever-type operating tool to be operated by a hand may also be used as the first indicator.

In the above embodiment, the pseudo clutch pedal 54 and the clutch position sensor 44 constitute a second indicator that can be operated concurrently with the pseudo clutch pedal 54 and issues a continuous instruction to the control device 101 according to the amount of operation of the pseudo clutch pedal 54. The pseudo clutch pedal 54 is a pedal-type operating device to be operated by a foot, but a lever-type operating device or a dial-type operating device to be operated by a hand may also be used as a second indicator. However, the second indicator is required to be operable by a foot or hand different from the foot or hand that operates the first indicator.

In the above embodiment, the pseudo-H-type shifter 56 and the shift position sensor 46 constitute a third indicator that issues a discrete instruction to the control device 101 for each operation of the pseudo-H-type shifter 56. The pseudo-H-type shifter 56 is a shifter in which a shift position is uniquely associated with each operation, but a relative instruction type shifter such as a sequential shifter may be used as the third indicator. The sequential shifter may have a structure that imitates, for example, a shift stick provided on a console or a shift paddle attached to a steering wheel.

A driving torque control technique disclosed in the present disclosure is not limited to battery electric vehicles (BEVs), and it can be widely applied to any electric vehicle that uses an electric motor as a driving power device for traveling. For example, the driving torque control technique disclosed in the present disclosure can be applied to hybrid electric vehicles (HEVs) and plug-in hybrid electric vehicles (PHEVs) that have a mode in which they travel with only the driving force of an electric motor. Furthermore, the driving torque control technique disclosed in the present disclosure can also be applied to fuel cell electric vehicles (FCEVs) in which electric energy generated by a fuel cell is supplied to an electric motor.

## Claims

1. An electric vehicle (100) having an electric motor (6) as a driving source, comprising:
a processor (110) configured to control driving torque to be output by the electric motor (6);
a first indicator, the first indicator being configured to issue a continuous instruction to the processor (110) according to an operation amount of the first indicator; and
a second indicator that is operable concurrently with the first indicator, the second indicator being configured to issue a continuous instruction to the processor (110) according to an operation amount of the second indicator, wherein the processor (110) is configured to:
determine a basic torque that is driving torque in a state where the second indicator is not operated, according to the operation amount of the first indicator and a vehicle speed of the electric vehicle;
change the driving torque between the basic torque and a minimum torque according to the operation amount of the second indicator; and
reduce sensitivity of the change of the driving torque according to the operation amount of the second indicator when a predetermined condition is satisfied.

2. The electric vehicle (100) according to claim 1 further comprising a third indicator configured to issue a discrete instruction to the processor (110) for each operation, wherein the processor (110) is configured to switch, from among a plurality of predetermined relations, a relation among the operation amount of the first indicator, the vehicle speed, and the basic torque according to an operation of the third indicator.

3. The electric vehicle (100) according to claim 1 or 2, wherein the predetermined condition includes that the vehicle speed is lower than a predetermined speed.

4. The electric vehicle (100) according to claim 1 or 2, wherein the predetermined condition includes that an operation speed of the second indicator is lower than a predetermined speed.

5. The electric vehicle (100) according to claim 2, wherein the predetermined condition includes that the third indicator is operated so as to increase the basic torque when the operation amount of the first indicator is identical and the vehicle speed is identical.

6. The electric vehicle (100) according to any one of claims 1 to 5, wherein the processor (110) is configured to increase the sensitivity when the operation amount of the first indicator increases in a state where the sensitivity is set to be small.

7. The electric vehicle (100) according to any one of claims 1 to 6, further comprising a sound generator (32) configured to artificially generate sound in a vehicle cabin, wherein the sound generator (32) is configured to:
increase sound pressure or frequency of the sound according to the operation amount of the second indicator; and
reduce sensitivity of a change of the sound pressure or frequency of the sound to the operation of the second indicator when the predetermined condition is satisfied.
